# EUROPÄISCHE PATENTSCHRIFT

(11) **EP 3 924 614 B1**
(45) Veröffentlichungstag und Bekanntmachung des Hinweises auf die Patenterteilung: **17.04.2024**
(21) Anmeldenummer: 19705484.4
(22) Anmeldetag: 13.02.2019
(51) Int. Cl.: F02M 26/65, F02M 26/73, F16K 49/00, F16K 1/00, F16K 31/52, F16K 41/02

(54) **VENTILVORRICHTUNG**
VALVE DEVICE
DISPOSITIF DE SOUPAPE

(43) Veröffentlichungstag der Anmeldung: 22.12.2021
(73) Patentinhaber: Pierburg GmbH, 41460 Neuss (DE)
(72) Erfinder: SIMONS, Norbert, 41460 Neuss (DE)
(74) Vertreter: terpatent Patentanwälte und European Patent Attorneys ter Smitten Eberlein -Van Hoof
(86) Internationale Anmeldenummer: PCT/EP2019/053490
(87) Internationale Veröffentlichungsnummer: WO 2020/164695

(56) Entgegenhaltungen:
- EP-A1- 2 434 195
- WO-A1-01/42640
- DE-A1- 10 232 072
- DE-A1-102014 109 273
- DE-A1-102016 010 772
- DE-T2- 69 710 318
- FR-A1- 2 902 470
- FR-A1- 2 944 333

## Beschreibung

Die vorliegende Erfindung betrifft eine Ventilvorrichtung mit einem Gehäuse, das einen Einlass und einen Auslass aufweist, einem Strömungskanal, der zwischen dem Einlass und dem Auslass ausgebildet ist, einem Ventilglied, über den ein freier Querschnitt des Strömungskanals regelbar ist, einer mit dem Ventilglied verbundenen Ventilstange, die mittels eines Aktuators bewegbar ist, einer Bohrung im Gehäuse sowie einer in der Bohrung befestigten Ventilführung, die durch ein zumindest eine Leiterbahn aufweisendes Heizelement beheizbar ist.

Derartige Ventilvorrichtungen kommen insbesondere in Verbrennungsmotoren als Abgasrückführventile zum Einsatz, können jedoch auch in anderen Anwendungen wie beispielsweise der Wärmerückgewinnung zu Heizzwecken eines Fahrgastinnenraums eingesetzt werden.

In Verbrennungsmotoren entstehen während des Verbrennungsprozesses gesundheitsschädliche Stickoxide (NOₓ). Die Stickoxidkonzentrationen im Abgas korrelieren dabei exponentiell mit der Verbrennungstemperatur. Die Minderung der Stickoxidemissionen wird daher u.a. durch die Senkung der Verbrennungstemperatur herbeigeführt, welche letztlich mit Hilfe der Abgasrückführung (AGR) erfolgt. Hierbei wird heißes Abgas aus dem Abgaskanal durch Nutzung eines AGR-Ventils abgezweigt und dem Ansaugtrakt zugeleitet und dort mit Frischluft gemengt. Die höhere Wärmekapazität des Abgases gegenüber Frischluft senkt die Verbrennungstemperatur, da das vorhandene Kohlendioxid einen Teil der Verbrennungswärme absorbiert. Mit anderen Worten nimmt das Abgas an der Verbrennung nicht teil, muss jedoch mit aufgeheizt werden. Infolge der geringeren Verbrennungstemperatur entstehen schlussendlich weniger Stickoxidemissionen. Durch den Einsatz eines integrierten Abgaskühlers kann die Effizienz der Abgasrückführung gesteigert und folglich die Stickoxidemissionen zusätzlich gesenkt werden.

Allerdings besteht bei der Abgasrückführung in Verbrennungsmotoren ein Zielkonflikt. Hohe AGR-Raten senken die NOₓ-Emissionen, fördern jedoch gleichzeitig die (Ruß-)Partikelkonzentrationen und den Wassergehalt im Abgasrückführkanal, wobei sich die Verunreinigungen bestehend aus Partikeln, Öldämpfen und Wasser im Zuge der Zeit zwischen der Ventilstange und der Ventilführung ablagern, wodurch sich die Ventilstange insbesondere bei wechselnden Temperaturen, wie nach dem Abstellen und Auskühlen des Verbrennungsmotors, festsetzen kann. Aus diesem Grund bedarf es einer Beheizung der Ventilstange, welche die Ablagerungen durch Wärmezufuhr loslöst bzw. sie durch Verdampfung der Flüssigkeiten im Abgas verhindert. Die verdampften Verunreinigungen können anschließend mit dem Abgasstrom fortgespült werden, sodass letztlich die Funktionsfähigkeit des AGR-Ventils nicht eingeschränkt wird. Eine derartige Anordnung zur thermischen Befreiung der Ventilstange von festgesetzten Ablagerungen wird beispielsweise in DE 10 2014 109 273 A1 offenbart.

Aus der FR 2 944 333 A1 ist ebenfalls eine solche Vorrichtung bekannt. Hierin sind zwei Ausführungen der Ventilstangenbeheizung vorgestellt. Dabei betrifft die erste Ausführung eine Beheizung, welche zwischen der Innenwand der Gehäusebohrung und der Ventilstange befestigt wird und daher die Ventilstange umgibt. In der zweiten Ausführung befindet sich die Beheizung innerhalb der Ventilstange. Die erste Ausführung geht mit einer erschwerten Montage einher, da hierbei Schäden der Beheizung entstehen können, wohingegen die zweite Ausführung eine aufwändigere und daher kostenintensivere Produktion erfordert.

Die Aufgabe der vorliegenden Erfindung liegt somit darin, das Festsetzen der Ventilstange infolge von Verunreinigungen unter Zuhilfenahme einer Beheizung zu verhindern, wobei eine erleichterte, schadenfreie Montage gewährleistet werden soll und marktübliche Produktionskosten der Bauteile eingehalten werden sollen.

Diese Aufgabe wird dadurch gelöst, dass die Ventilführung zumindest teilweise in ihrem Außendurchmesser reduziert und das Heizelement auf den in ihrem Außendurchmesser reduzierten Bereich der Ventilführung angeordnet ist. So ergeben sich im montierten Zustand sowohl Bereiche, in denen die Ventilführung durch Press- oder Übergangspassungen mit der Innenwand der Gehäusebohrung verbunden sind und an denen keine Leiterbahn des Heizelementes angeordnet ist, als auch solche, die Abstände zwischen der Ventilführung und der Innenwand der Gehäusebohrung aufweisen, wobei an diesen die Leiterbahn angeordnet ist. Angesichts der Tatsache, dass die Kontaktflächen zwischen der Ventilführung und der Gehäusebohrung sich nicht entlang der gesamten Ventilführungslänge erstrecken, ergibt sich darüber hinaus der Vorteil, dass eine geringere Reib- und damit auch geringere Anpresskraft während des Einpressens bzw. der Montage der Ventilführung erforderlich ist.

Dadurch, dass ein Gehäuseteil, beispielsweise das Steckergehäuse, in dem sämtliche Bauteile für die Stromversorgung des Aktuators eingebaut sind und das folglich einen Stecker aufweist, Kontaktfahnen für die elektrische Versorgung des Heizelements umfasst, kann durch das Schließen des besagten Gehäuseteils automatisch die Verbindung zur stromführenden Beheizung auf der Ventilführung hergestellt werden. Die Kontaktfahnen ragen dabei im geöffneten Zustand des Steckergehäuses aus dem Inneren des Steckergehäuses hinaus. Wird nun das Steckergehäuse zum Schließen des Aktuatorgehäuses auf Letzteres montiert, liegen die Kontaktfahnen ohne weiteres Zutun federnd gegen die beiden Pole des um den Ventilführungsumfang angeordneten Heizelements an. Somit entfällt eine zusätzliche elektrische Kontaktierung der beheizbaren Ventilführung in Form von beispielsweise Klemmen, Steckkontakten oder stoffschlüssigen Verbindungen.

Vorzugsweise ist das Heizelement durch eine elektrische Dickschichtbeheizung ausgebildet, welche auf der Außenseite und der im Durchmesser reduzierten Bereiche der Ventilführung aufgebracht ist. In Abgrenzung zu herkömmlichen Heizelementen können die Leiterbahnen der Dickschichtbeheizungen eine Breite von lediglich 1 Millimeter aufweisen, wodurch viele filigrane Formen, auch auf rohrförmigen Geometrien, möglich sind. Wichtigster Vorteil der Dickschichtbeheizung ist, dass sich die Leiterbahn näher am Material auftragen lässt. Hierdurch lässt sich die Wärme schneller und lokal sehr viel genauer verteilen. Des Weiteren ist eine stufenlose Steuerung der Wärmeleistung möglich.

In einer bevorzugten Ausführung der Erfindung erstrecken sich die Enden der Leiterbahn des Heizelements zur Herstellung der Verbindung mit den Kontaktfahnen über den Ventilführungsumfang. Hierbei sind die als Plus- und Minuspol fungierenden Enden der Leiterbahn axial zueinander beabstandet. Auf diese Weise muss die genaue Orientierung der Ventilführung in Drehwinkelrichtung innerhalb der Gehäusebohrung während des Montagevorgangs nicht beachtet werden, wodurch ein vereinfachter und schneller Einbau gewährleistet wird, da die aus dem Steckergehäuse herausragenden Kontaktfahnen korrespondierend zu den sich über den Ventilführungsumfang erstreckenden Enden der Leiterbahn axial übereinander liegend angeordnet sind und entsprechend federnd gegen die Enden anliegen.

In einer alternativen vorteilhaften Ausführung sind die Enden der Leiterbahn (62) parallel axial nebeneinander und korrespondierend zu den Kontaktfahnen (90) angeordnet, die federnd gegen die Enden der Leiterbahn (62) anliegen. Dabei korrespondieren die Positionen der Kontaktfahnen zu denen der Enden der Leiterbahn. Auf diese Weise wird die elektrische Kontaktierung des Heizelements sichergestellt.

Vorzugsweise verläuft die Leiterbahn auf der Außenseite der Ventilführung mäanderförmig. Durch diese Ausgestaltung wird die elektrisch produzierte Wärme durch die Ventilführung gleichmäßig geleitet. Ferner kann durch die mäanderförmige Ausführung eine große Leiterbahnfläche realisiert und damit einhergehend den Verunreinigungen eine hohe Wärmeleistung zugeführt werden. Zudem können die beiden Enden der Leiterbahn unmittelbar nebeneinander angeordnet werden, unabhängig vom Verlauf der Leiterbahn zwischen ihren Enden. Dies erleichtert die elektrische Kontaktierung über die Kontaktfahnen.

In einer alternativen vorteilhaften Ausführung der Erfindung ist die Leiterbahn auf der Außenseite der Ventilführung spiralförmig ausgebildet. Auch auf diese Weise wird über den Umfang eine gleichmäßige Erwärmung der Ventilführung und letztendlich der Verunreinigungen bzw. Ablagerungen gewährleistet.

In einer besonders bevorzugten Ausführung der Erfindung betätigt der Aktuator die Ventilstange innerhalb der Ventilführung translatorisch. Hierbei führt die Ventilstange und damit einhergehend auch das Ventilglied eine lineare Bewegung aus, sodass die fluidische Verbindung zwischen Ein- und Auslass der Ventilvorrichtung sowohl hergestellt als auch unterbrochen werden kann.

In einer alternativen Ausführung der Erfindung wird die Ventilstange durch den Aktuator rotatorisch bewegt. Dies kann beispielsweise zur Beheizung der Ventilführungen von Abgasklappen oder AGR-Klappen in größeren Motoren Anwendung finden.

Vorteilhafterweise sind zwischen der Ventilführung und der Innenwand der Bohrung des Gehäuses mindestens zwei Berührungsflächen ausgebildet, die axial zueinander beabstandet sind. Mit Hilfe dieser ausreichenden Anzahl an Kontaktflächen wird die Ventilführung in der Bohrung befestigt und eine etwaige Bewegung im Betrieb unterbunden. Auf diese Weise wird das zweckmäßige Gleiten der Ventilstange innerhalb der Ventilführung sichergestellt.

Vorzugsweise erstrecken sich die Berührungsflächen zwischen der Ventilführung und der Innenwand der Gehäusebohrung über den Ventilführungsumfang. So wird die sichere Befestigung der Ventilführung gewährleistet. Hierbei erstreckt sich zumindest die zum Ventilglied weisende Berührungsfläche vollumfänglich über die Ventilführung, so dass durch die Übergangs- oder Presspassung zwischen Ventilführung und Gehäusebohrung auch eine Abdichtungsfunktion gegenüber dem Abgas erfüllt wird.

Weiterhin ist es vorteilhaft, dass die näher zum Aktuator (22) angeordnete Berührungsfläche (42) über einen Umfangsabschnitt unterbrochen ist, wobei die Ventilführung (40) in diesem Umfangsabschnitt in ihrem Außendurchmesser reduziert ist, wobei die kleinste Bogenlänge des im Durchmesser reduzierten Umfangsabschnitts mindestens der zweifachen Breite der Leiterbahn (62) entspricht. Der als Aussparung ausgebildete Umfangsabschnitt muss hierbei hinlänglich groß sein, damit die Enden der auf der Ventilführung angeordneten Leiterbahn überstehen, um letztendlich die elektrische Verbindung des Heizelementes zu den Kontaktfahnen herstellen zu können. So können die Enden der Leiterbahnen axial in den Bereich der Berührungsfläche gelegt werden, so dass Fehler bei der Kontaktierung durch einen Drehwinkelversatz beim Einbau ausgeschlossen werden.

Vorteilhafterweise sind die beiden Berührungsflächen jeweils an den axialen Enden der Ventilführung ausgebildet. Diese Ausführung gewährleistet eine große Stabilität bzw. Biegesteifigkeit der Ventilführung.

Des Weiteren befinden sich in einer hierzu weiterführenden Ausführung an der zum Aktuator weisenden Berührungsfläche mindestens drei die Gehäusebohrung berührende Abschnitte, die gleichmäßig über den Umfang verteilt angeordnet sind. So wird sichergestellt, dass eine etwaige Bewegung der Ventilführung in alle Richtungen innerhalb jeder Ebene quer zur Ventilstangenachse unterbunden wird.

Vorzugsweise ist die Ventilführung in zumindest einem axialen Abschnitt in ihrem Innendurchmesser vollumfänglich erweitert ausgebildet, wodurch die Montage der Ventilstange erleichtert und deren Verschleiß reduziert wird. Zusätzlich können auf diese Weise Aufnahmen für Dichtelemente geschaffen werden.

Es wird somit eine Ventilvorrichtung geschaffen, welche eine lange Lebensdauer aufweist, da durch die Wärmezufuhr Ablagerungen und somit ein Festsetzen der Ventilstange bzw. ein Funktionsausfall des Ventils verhindert wird. Dabei werden die Produktionskosten und der Montageaufwand gering gehalten.

Weitere Einzelheiten und Vorteile der vorliegenden Erfindung ergeben sich aus der nachfolgenden Beschreibung der Ausführungsbeispiele in Verbindung mit den Zeichnungen.

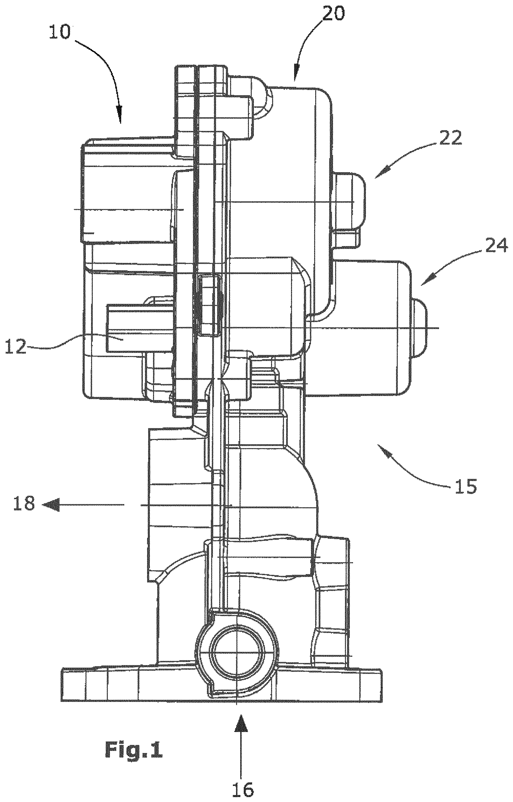

Figur 1 zeigt eine Seitenansicht des Gehäuses einer erfindungsgemäßen Ventilvorrichtung.
Figur 2 zeigt eine perspektivische Ansicht der erfindungsgemäßen Ventilvorrichtung aus Figur 1 bei ausgeblendetem Aktuatorgehäuse.
Figur 3 zeigt eine perspektivische Ansicht der Ventilführung mit mäanderförmiger Dickschichtbeheizung aus Figur 2.
Figur 4 zeigt einen Ausschnitt einer perspektivischen Ansicht der Ventilführung im innerhalb der Bohrung des Aktuatorgehäuses montierten Zustand.
Figur 5 zeigt einen Ausschnitt einer perspektivischen Ansicht der Ventilführung im elektrisch kontaktierten Zustand der mäanderförmigen Dickschichtbeheizung über die Kontaktfahnen aus dem Steckergehäuse.
Figur 6 zeigt einen Ausschnitt einer Seitenansicht der Ventilführung in geschnittener Darstellung.
Figur 7 zeigt die Seitenansicht eines zweiten Ausführungsbeispiels der Dickschichtbeheizung mit ringförmig und parallel zueinander verlaufenden Enden der Leiterbahn.

Die in den Figuren dargestellte Ventilvorrichtung weist ein Gehäuse 15 auf, welches aus einem Steckergehäuse 10 und einem Aktuatorgehäuse 20 besteht. Im Steckergehäuse 10 sind sämtliche Bauteile für die Stromversorgung eines Aktuators 22 inklusive einer nicht dargestellten Steuereinheit für einen Elektromotor 24 eingebaut. Am Steckergehäuse 10 ist ein Stecker 12 zur elektrischen Kontaktierung der Ventilvorrichtung nach außen ausgebildet. Darüber hinaus beherbergt das Steckergehäuse 10 eine erste, nicht dargestellte Getriebestufe zur Betätigung des Ventils. Ein Ritzel dieser ersten Getriebestufe ist auf einer Antriebswelle des Elektromotors 24 befestigt, wobei der Elektromotor 24 selbst im Aktuatorgehäuse 20 untergebracht ist.

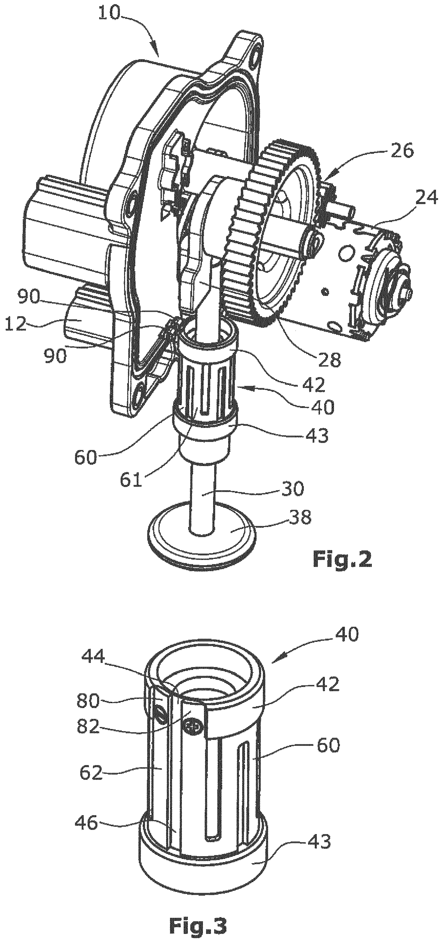

In Fig. 2 ist der Elektromotor 24 zu sehen. Des Weiteren ist die zweite Getriebestufe 26 zum Antrieb eines Ventils ersichtlich. Durch die Bestromung des Elektromotors 24 wird über die beiden Getriebestufen eine als Exzenter ausgebildete Einheit derart in Bewegung versetzt, dass eine translatorische Bewegung einer Kulisse 28 hervorgerufen wird. Eine Ventilstange 30, welche mit der Kulisse 28 verbunden ist, führt hierdurch ebenfalls eine translatorische Bewegung aus. Dabei erfahren die Kulisse 28 und die Ventilstange 30 durch eine Druckfeder 32 eine Druckbelastung. Die Druckfeder 32 wird hierbei auf einer Anlagefläche 34 an einem ringförmigen Vorsprung 36 am Aktuatorgehäuse 20 und auf einer zweiten Anlagefläche 39 an der Kulisse 28 abgestützt, so dass das Ventil in Schließrichtung vorgespannt wird.

Aufgrund der Rotation der exzentrisch ausgebildeten Einheit am Aktuator 22 sowie infolge der Wechselwirkung dieser Einheit mit der Kulisse 28 erfolgt eine translatorische Auf- und Ab-Bewegung der Ventilstange 30. Ein an der Ventilstange 30 befestigtes Ventilglied 38 kann auf diese Weise die fluidische Verbindung zwischen dem Einlass und dem Auslass des Gehäuses abwechselnd trennen und wiederherstellen.

Die translatorische Bewegung der Ventilstange 30 erfolgt innerhalb einer Ventilführung 40, die in einer Bohrung 50 im Gehäuse 15 befestigt ist. Die Ventilführung 40 ist hierbei weitestgehend rotationssymmetrisch ausgebildet und gleicht einem Hohlzylinder mit reduziertem Durchmesser im mittleren Bereich. An den axial beabstandeten Endbereichen größeren Außendurchmessers erfolgt die Befestigung der Ventilführung 40 in der Bohrung 50 durch Press- oder Übergangspassungen über zylindrisch in Umfangsrichtung weisende Berührungsflächen 42, 43. Hierbei ist die zum Aktuator 22 weisende Berührungsfläche 42 über einen Teil ihres Umfangs mit einer Ausnehmung 44 versehen beziehungsweise unterbrochen, so dass ein Umfangsabschnitt mit verringertem Außendurchmesser entsteht, der die Innenwand der Bohrung 50 nicht mehr berührt, (siehe Fig. 3).

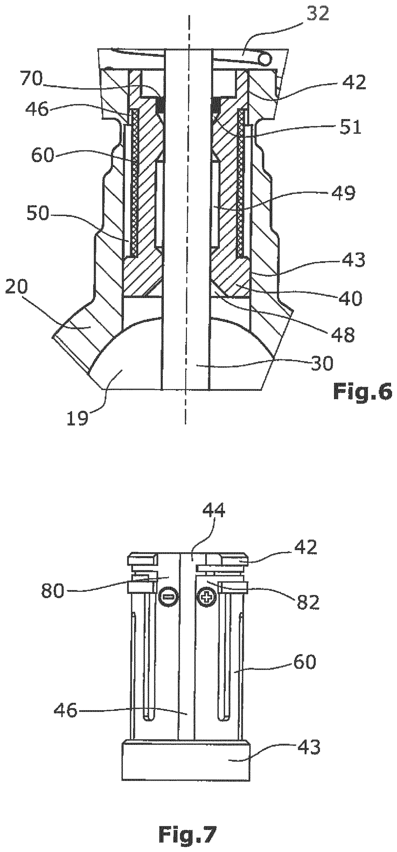

Des Weiteren weist die Ventilführung 40 einen vollumfänglich im Außendurchmesser reduzierten Bereich 46 im axial mittleren Bereich der Ventilführung 40 sowie drei vollumfängliche Materialaussparungen bzw. Durchmessererhöhungen 48, 49, 51 an ihrem Innendurchmesser auf (siehe Fig. 6). Die erste Durchmessererhöhung 48 befindet sich an der zum Ventilglied 38 weisenden Seite und ist als Innenfase ausgebildet, um die Aufnahme der Ventilstange 30 beim Einführen zu erleichtern. Die zweite Durchmessererhöhung 49 befindet sich im mittleren Bereich der Ventilführung 40 und hat zum Zweck, die Kontaktfläche zwischen Ventilstange 30 und Ventilführung 40 zu verringern. Die dritte Durchmessererhöhung 51 dient der Aufnahme einer Dichtung 70. Die Dickschichtbeheizung 60 ist auf dem Außenumfang der Ventilführung 40, im Außendurchmesser reduzierten Bereich 46, mäanderförmig befestigt.

Das Einpressen der Ventilführung 40 in die Bohrung 50 des Gehäuses 15 wird aufgrund des im Außendurchmesser reduzierten Bereichs 46 der Ventilführung 40 und damit einhergehend aufgrund einer geringeren Reibungsfläche erleichtert. Darüber hinaus erfolgt infolge der verringerten Kontaktfläche zwischen der im Betrieb translatorisch bewegten Ventilstange 30 und der stets feststehenden Ventilführung 40 das Gleiten der Ventilstange 30 unter geringerem Energieaufwand. Ferner wird die Wärmeproduktion aufgrund der verringerten Gleitreibung zwischen der Ventilstange 30 und der Ventilführung 40 möglichst minimiert.

Die zum Ventilglied 38 weisende Berührungsfläche 43 der Ventilführung 40 ist durch eine Übergangs- oder Presspassung über ihren vollständigen Umfang gekennzeichnet. Des Weiteren befindet sich die Dichtung 70 zwischen der Ventilstange 30 und der Ventilführung 40. Durch die Übergangs- bzw. Presspassung zwischen der Ventilführung 40 und der Bohrung 50 des Gehäuses 15 einerseits, sowie mit Hilfe der Dichtung 70 zwischen der Ventilstange 30 und der Ventilführung 40 andererseits wird gewährleistet, dass im Falle einer Anwendung der Ventilvorrichtung als Abgasrückführventil keine Abgase in das Aktuatorgehäuse 20 und das Steckergehäuse 10 gelangen. Hierdurch wird die Funktionstüchtigkeit des Elektromotors 24, des Aktuatorgetriebes sowie der elektrischen Bauteile sichergestellt, da Korrosion und hohe Temperaturen durch heiße Abgase an beispielsweise Zahnrädern, an der Steuereinheit oder den Spulen des Elektromotors verhindert werden.

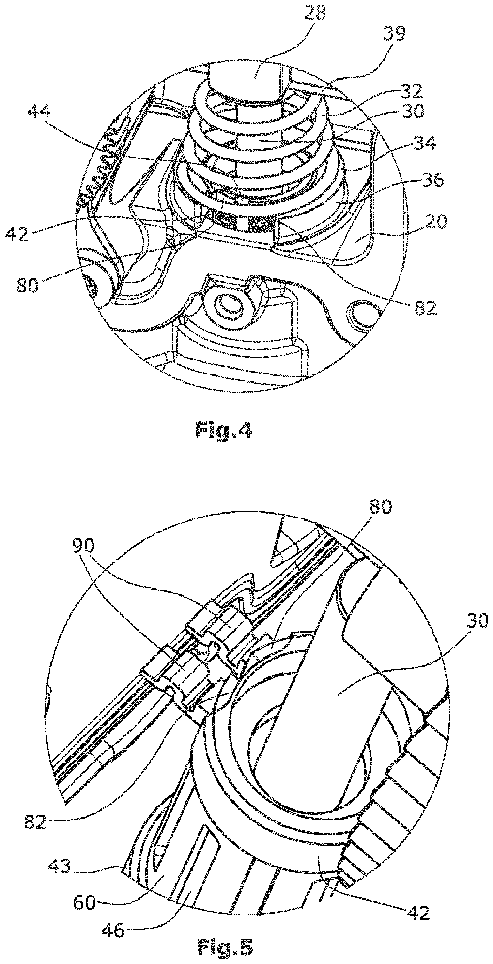

In Fig. 4 ist die Ventilführung 40 im eingebauten Zustand innerhalb des Aktuatorgehäuses 20 zu sehen. Die Enden der Leiterbahn 62 der Dickschichtbeheizung 60, welche als Minuspol 80 und Pluspol 82 fungieren, ragen dabei an der Ausnehmung 44 parallel zur Längsachse der Ventilstange 30 hinaus. Dabei korrespondiert die genaue Lage der Pole 80 und 82 mit einer im ringförmigen Vorsprung 36 befindlichen Materialaussparung. Die überstehenden Pole 80 und 82 werden im Betrieb mit den Kontaktfahnen 90, welche aus dem Steckergehäuse 10 hinausragen, elektrisch kontaktiert. Hierbei sind die Kontaktfahnen 90 derart korrespondierend zum Minuspol 80 und Pluspol 82 angeordnet, dass beim Verschließen bzw. bei der Befestigung des Steckergehäuses 10 ein federnder mechanischer und somit auch ein elektrischer Kontakt automatisch hergestellt wird.

Infolge der elektrischen Kontaktierung kann die Dickschichtbeheizung 60 eine Wärmeleistung erbringen. Die produzierte Wärme wird mittels Wärmeleitung durch die Ventilführung 40 den Ablagerungen zwischen der Ventilstange 30 und der Ventilführung 40 zugeführt. Auf diese Weise werden die Ablagerungen verringert. Ferner kann bei einem Kaltstart gefrorenes Eis erhitzt und verdampft werden, sodass ein Festsetzen der Ventilstange 30 in der Ventilführung 40 verhindert wird. Der Reinigungseffekt der Ventilvorrichtung, der hierdurch bewerkstelligt wird, erhält so die Funktionstüchtigkeit der Ventilvorrichtung aufrecht.

In Figur 7 ist ein zweites Ausführungsbeispiel der Ventilführung 40 bzw. Dickschichtbeheizung 60 dargestellt. Der Minuspol 80 und der Pluspol 82 sind hierbei in Abgrenzung zum ersten Ausführungsbeispiel nicht parallel zur Längsachse der Ventilführung 40 angeordnet (vgl. Fig. 3), sondern verlaufen um den Umfang der Ventilführung 40. Dabei sind die beiden Pole axial beabstandet und verlaufen nahezu vollumfänglich, d.h. mit einer kleinen Unterbrechung in Umfangsrichtung. Die Unterbrechung ist hierbei konstruktionsbedingt erforderlich, um eine Kurzschlussreaktion zwischen dem Minuspol 80 und dem Pluspol 82 zu vermeiden.

Der Vorteil des zweiten Ausführungsbeispiels liegt in der vereinfachten Montage der Ventilführung 40 im Allgemeinen, und in ihrer einfacheren Ausrichtung innerhalb der Bohrung 50 des Gehäuses im Besonderen. Im ersten Ausführungsbeispiel war die genaue Position der Pole 80 und 82 durch die Ausnehmung am ringförmigen Vorsprung 36 des Aktuatorgehäuses 20 vorgegeben. Entsprechend ist im ersten Ausführungsbeispiel die Ventilführung 40 innerhalb der Bohrung 50 soweit zu drehen, bis das Minuspol 80 und das Pluspol 82 korrespondierend zur Ausnehmung am ringförmigen Vorsprung 36 angeordnet sind. Im Fall des zweiten Ausführungsbeispiels hingegen ist die Montage insofern einfacher, als dem exakten Drehwinkel der Ventilführung 40 weniger Beachtung geschenkt werden muss, da sich das Minuspol 80 und das Pluspol 82 über nahezu den gesamten Ventilführungsumfang erstrecken.

Durch die erfindungsgemäße Ventilvorrichtung wird die Lebensdauer deutlich erhöht, da die Funktionsfähigkeit auch bei tiefen Temperaturen und hohen physikalischen Belastungen durch auftretende Ablagerungen erhalten bleibt. Insbesondere ist eine derartige Ventilvorrichtung unmittelbar nach dem Kaltstart und somit in Phasen höchsten Schadstoffausstoßes sehr schnell betriebsbereit.

## Patentansprüche

1. Ventilvorrichtung für eine Verbrennungskraftmaschine mit
einem Gehäuse (15), das einen Einlass (16) und einen Auslass (18) aufweist,
einem Strömungskanal (19), der zwischen dem Einlass (16) und dem Auslass (18) ausgebildet ist,
einem Ventilglied (38), über den ein freier Querschnitt des Strömungskanals regelbar ist,
einer mit dem Ventilglied (38) verbundenen Ventilstange (30), die mittels eines Aktuators (22) bewegbar ist,
einer Bohrung im Gehäuse (15) sowie
einer in der Bohrung (50) befestigten Ventilführung (40), die durch ein Heizelement (60, 61) beheizbar ist,
**dadurch gekennzeichnet, dass**
das Heizelement (60, 61) zumindest eine Leiterbahn (62) aufweist, und
die Ventilführung (40) zumindest teilweise in ihrem Außendurchmesser reduziert und das Heizelement (60, 61) auf den in ihrem Außendurchmesser reduzierten Bereich (46) der Ventilführung (40) angeordnet ist.

2. Ventilvorrichtung nach Anspruch 1, **dadurch gekennzeichnet, dass** ein Steckergehäuse (10), an dem ein Stecker (12) ausgebildet ist, Kontaktfahnen (90) aufweist, über die das Heizelement (60, 61) elektrisch kontaktiert ist.

3. Ventilvorrichtung nach Anspruch 2, **dadurch gekennzeichnet, dass** das Heizelement (60, 61) durch eine elektrische Dickschichtbeheizung (60) ausgebildet ist.

4. Ventilvorrichtung nach Anspruch 2 oder 3, **dadurch gekennzeichnet, dass** die Enden der Leiterbahn (62) des Heizelements (60, 61) zur Herstellung der Verbindung mit den Kontaktfahnen (90) sich über den Ventilführungsumfang erstrecken, wobei das erste Ende axial beabstandet zum zweiten Ende angeordnet ist, und die beiden Enden parallel zueinander verlaufen.

5. Ventilvorrichtung nach Anspruch 2, **dadurch gekennzeichnet, dass** die Enden der Leiterbahn (62) parallel axial nebeneinander und korrespondierend zu den Kontaktfahnen (90) angeordnet sind, die federnd gegen die Enden der Leiterbahn (62) anliegen.

6. Ventilvorrichtung nach einem der vorhergehenden Ansprüche, **dadurch gekennzeichnet, dass** die Leiterbahn (62), zumindest zwischen den Enden der Leiterbahn (62), mäanderförmig ausgebildet ist.

7. Ventilvorrichtung nach einem der Ansprüche 1 bis 5, **dadurch gekennzeichnet, dass** die Leiterbahn (62), zumindest zwischen den Enden der Leiterbahn, spiralförmig ausgebildet ist.

8. Ventilvorrichtung nach einem der vorangegangenen Ansprüche, **dadurch gekennzeichnet, dass** die vom Aktuator (22) betätigte Ventilstange (30) innerhalb der Ventilführung (40) eine translatorische Bewegung ausführt.

9. Ventilvorrichtung nach einem der Ansprüche 1 bis 7, **dadurch gekennzeichnet, dass** die vom Aktuator (22) betätigte Ventilstange (30) innerhalb der Ventilführung (40) eine rotatorische Bewegung ausführt.

10. Ventilvorrichtung nach einem der vorangegangenen Ansprüche, **dadurch gekennzeichnet, dass** zwischen der Ventilführung (40) und der Innenwand der Bohrung (50) des Gehäuses (15) mindestens zwei Berührungsflächen (42, 43) axial beabstandet zueinander ausgebildet sind.

11. Ventilvorrichtung nach Anspruch 10, **dadurch gekennzeichnet, dass** die Berührungsflächen (42, 43) zwischen der Ventilführung (40) und der Bohrung (50) des Gehäuses (15) sich über ihren Umfang erstrecken.

12. Ventilvorrichtung nach Anspruch 10, **dadurch gekennzeichnet, dass** die näher zum Aktuator (22) angeordnete Berührungsfläche (42) über einen Umfangsabschnitt unterbrochen ist, wobei die Ventilführung (40) in diesem Umfangsabschnitt in ihrem Außendurchmesser reduziert ist, wobei die kleinste Bogenlänge des im Durchmesser reduzierten Umfangsabschnitts mindestens der zweifachen Breite der Leiterbahn (62) entspricht.

13. Ventilvorrichtung nach einem der Ansprüche 10 bis 12, **dadurch gekennzeichnet, dass** jeweils eine Berührungsfläche (42, 43) an den axialen Enden der Ventilführung (40) ausgebildet ist.

14. Ventilvorrichtung nach Anspruch 10, **dadurch gekennzeichnet, dass** an der zum Aktuator (22) weisenden Berührungsfläche (42) mindestens drei die Bohrung (50) des Gehäuses (15) berührende Umfangsabschnitte ausgebildet sind.

15. Ventilvorrichtung nach einem der vorhergehenden Ansprüche, **dadurch gekennzeichnet, dass** die Ventilführung (40) in zumindest einem axialen Abschnitt in ihrem Innendurchmesser vollumfänglich erweitert ausgebildet ist.

## Claims

1. Valve device for an internal combustion engine comprising
a housing (15) comprising an inlet (16) and an outlet (18),
a flow channel (19) configured between the inlet (16) and the outlet (18),
a valve member (38), via which a free cross-section of the flow channel can be regulated,
a valve rod (30) connected to the valve member (38), which can be moved by means of an actuator (22),
a bore in the housing (15) and
a valve guide (40) attached in the bore (50), which can be heated by a heating element (60, 61),
**characterised in that**
the heating element (60, 61) comprises at least one conductor path (62), and
the valve guide (40) is at least partially reduced in its outer diameter and the heating element (60, 61) is arranged at the region (46) of the valve guide (40) which is reduced in its outer diameter.

2. Valve device according to claim 1, **characterised in that** a plug housing (10), at which a plug (12) is configured, comprises contact lugs (90), via which the heating element (60, 61) is electrically contacted.

3. Valve device according to claim 2, **characterised in that** the heating element (60, 61) is configured as an electric thick-film heater (60).

4. Valve device according to claim 2 or 3, **characterised in that** the ends of the conductor path (62) of the heating element (60, 61) for establishing the connection with the contact lugs (90) extend over the valve guide circumference, wherein the first end is arranged axially spaced from the second end, and the two ends run parallel to one another.

5. Valve device according to claim 2, **characterised in that** the ends of the conductor path (62) are arranged axially parallel to one another and corresponding to the contact lugs (90), which bear resiliently against the ends of the conductor path (62).

6. Valve device according to one of the preceding claims, **characterised in that** the conductor path (62) is configured in a meandering manner, at least between the ends of the conductor path (62).

7. Valve device according to one of claims 1 to 5, **characterised in that** the conductor path (62) is configured in a spiral shape, at least between the ends of the conductor path.

8. Valve device according to one of the preceding claims, **characterised in that** the valve rod (30) actuated by the actuator (22) configures a translatory movement within the valve guide (40).

9. Valve device according to one of claims 1 to 7, **characterised in that** the valve rod (30) actuated by the actuator (22) performs a rotational movement within the valve guide (40).

10. Valve device according to one of the preceding claims, **characterised in that** at least two contact surfaces (42, 43) are configured axially spaced apart from one another between the valve guide (40) and the inner wall of the bore (50) of the housing (15).

11. Valve device according to claim 10, **characterised in that** the contact surfaces (42, 43) between the valve guide (40) and the bore (50) of the housing (15) extend over their circumference.

12. Valve device according to claim 10, **characterised in that** the contact surface (42) arranged closer to the actuator (22) is interrupted over a circumferential section, wherein the valve guide (40) is reduced in its outer diameter in this circumferential section, wherein the smallest arc length of the circumferential section reduced in diameter is at least twice the width of the conductor path (62).

13. Valve device according to one of claims 10 to 12, **characterised in that** a contact surface (42, 43) is configured respectively at the axial ends of the valve guide (40).

14. Valve device according to claim 10, **characterised in that** at least three circumferential sections contacting the bore (50) of the housing (15) are configured on the contact surface (42) facing the actuator (22).

15. Valve device according to one of the preceding claims, **characterised in that** the valve guide (40) is configured to be fully widened in its inner diameter in at least one axial section.

## Revendications

1. Dispositif de vanne pour un moteur à combustion interne avec
un boîtier (15) qui comprend une entrée (16) et une sortie (18),
un canal d'écoulement (19) formé entre l'entrée (16) et la sortie (18),
un organe de soupape (38), par l'intermédiaire duquel une section libre du canal d'écoulement peut être réglée,
une tige de soupape (30) reliée à l'organe de soupape (38), qui peut être déplacée au moyen d'un actionneur (22),
un alésage dans le boîtier (15) et
un guide de soupape (40) fixé dans l'alésage (50), qui peut être chauffé par
un élément chauffant (60, 61),
**caractérisé en ce que**
l'élément chauffant (60, 61) comprend au moins une piste conductrice (62), et
le guide de soupape (40) est au moins partiellement réduit dans son diamètre extérieur et l'élément chauffant (60, 61) est disposé sur la zone (46) du guide de soupape (40) dont le diamètre extérieur est réduit.

2. Dispositif de vanne selon la revendication 1, **caractérisé en ce qu'**un boîtier de connecteur (10), auquel est formé un connecteur (12), comprend des languettes de contact (90) par lesquelles l'élément chauffant (60, 61) est mis en contact électrique.

3. Dispositif de vanne selon la revendication 2, **caractérisé en ce que** l'élément chauffant (60, 61) est réalisé par un chauffage électrique à couche épaisse (60).

4. Dispositif de vanne selon la revendication 2 ou 3, **caractérisé en ce que** les extrémités de la piste conductrice (62) de l'élément chauffant (60, 61) pour établir la connexion avec les languettes de contact (90) s'étendent sur la périphérie du guide de vanne, la première extrémité étant espacée axialement de la deuxième extrémité, et les deux extrémités étant parallèles entre elles.

5. Dispositif de vanne selon la revendication 2, **caractérisé en ce que** les extrémités de la piste conductrice (62) sont disposées parallèlement et axialement l'une à côté de l'autre et en correspondance avec les languettes de contact (90), qui s'appuient élastiquement contre les extrémités de la piste conductrice (62).

6. Dispositif de vanne selon l'une des revendications précédentes, **caractérisé en ce que** la piste conductrice (62) est réalisée en forme de méandres, au moins entre les extrémités de la piste conductrice (62).

7. Dispositif de vanne selon l'une quelconque des revendications 1 à 5, **caractérisé en ce que** la piste conductrice (62), au moins entre les extrémités de la piste conductrice, est de forme hélicoïdale.

8. Dispositif de vanne selon l'une des revendications précédentes, **caractérisé en ce que** la tige de vanne (30) actionnée par l'actionneur (22) effectue un mouvement de translation à l'intérieur du guide de vanne (40).

9. Dispositif de vanne selon l'une des revendications 1 à 7, **caractérisé en ce que** la tige de vanne (30) actionnée par l'actionneur (22) effectue un mouvement de rotation à l'intérieur du guide de vanne (40).

10. Dispositif de vanne selon l'une des revendications précédentes, **caractérisé en ce qu'**au moins deux surfaces de contact (42, 43) sont configurées à distance axiale l'une de l'autre entre le guide de vanne (40) et la paroi interne de l'alésage (50) du boîtier (15).

11. Dispositif de vanne selon la revendication 10, **caractérisé en ce que** les surfaces de contact (42, 43) entre le guide de vanne (40) et l'alésage (50) du boîtier (15) s'étendent sur leur périphérie.

12. Dispositif de vanne selon la revendication 10, **caractérisé en ce que** la surface de contact (42) disposée plus près de l'actionneur (22) est interrompue sur une portion de circonférence, le guide de vanne (40) étant réduit en diamètre extérieur dans cette portion de circonférence, la plus petite longueur d'arc de la portion de circonférence réduite en diamètre est au moins égale à deux fois la largeur de la piste conductrice (62).

13. Dispositif de vanne selon l'une des revendications 10 à 12, **caractérisé en ce qu'**une surface de contact (42, 43) est réalisée à chacune des extrémités axiales du guide de vanne (40).

14. Dispositif de vanne selon la revendication 10, **caractérisé en ce qu'**au moins trois portions périphériques en contact avec l'alésage (50) du boîtier (15) sont configurées sur la surface de contact (42) orientée vers l'actionneur (22).

15. Dispositif de vanne selon l'une des revendications précédentes, **caractérisé en ce que** le guide de vanne (40) est configuré de manière à être entièrement élargi dans son diamètre intérieur dans au moins une section axiale.
